# EUROPEAN PATENT APPLICATION

(11) **EP 4 296 388 A1**
(43) Date of publication of application: **27.12.2023**
(21) Application number: 22756030.7
(22) Date of filing: 08.02.2022
(51) Int. Cl.: C22B 1/02, C22B 7/00, C22B 26/12, C22B 3/06, C22B 3/44

(54) **VALUABLE METAL RECOVERY METHOD AND RECOVERY APPARATUS**

(30) Priority: 17.02.2021 JP 2021023309
(71) Applicant: Mitsubishi Materials Corporation, Tokyo 100-8117 (JP)
(72) Inventor: KURAMOCHI, Kenta, Iwaki-shi, Fukushima 971-8101 (JP); MIYAZAKI, Atsushi, Iwaki-shi, Fukushima 971-8101 (JP); MURAOKA, Hiroki, Iwaki-shi, Fukushima 971-8101 (JP)
(74) Representative: Gille Hrabal Partnerschaftsgesellschaft mbB Patentanwälte
(86) International application number: PCT/JP2022/004921
(87) International publication number: WO 2022/176709

(57) **Abstract**

A valuable metal recovery method includes: screening a battery slag from lithium ion battery waste; adding an acid to the battery slag; adding a sulfur compound the leachate; filtering the first processed product to obtain a first processed filtrate; adding a sulfur compound to the first processed filtrate; filtering the second processed product to obtain a second processed filtrate; adding calcium hydroxide to the second processed filtrate; filtering the third processed product to obtain a third processed filtrate; adding sodium carbonate to the third processed filtrate; filtering the processed product; heating the fourth processed filtrate; blowing carbon dioxide or adding a carbonate; and filtering the processed product, wherein a pH of the second processed product is higher than a pH of the first processed product, and a pH of the third processed product is higher than the pH of the second processed product.

## Description

### [Technical Field]

The present invention relates to a valuable metal recovery method and a recovery apparatus.

Priority is claimed on Japanese Patent Application No. 2021-023309, filed February 17, 2021, the content of which is incorporated herein by reference.

### [Background Art]

In the following Patent Document 1, it is described in a technology that an acid is added to a battery slag recovered from lithium ion battery waste to produce a leachate, sodium hydroxide or calcium hydroxide (additive) is added to the leachate to produce a processed product, the processed product is solid-liquid separated to separate a filtrate (lithium dissolution solution) from a residue, and a Li content contained in the filtrate is carbonated and recovered.

However, in the technology described in Patent Document 1 below, when sodium hydroxide is used as an additive, a large amount of a Na content is mixed therein, so that a washing load of the Na content during production of lithium carbonate increases. On the other hand, when calcium hydroxide is used as an additive, a Ca content is carbonated together with a Li content during the production of lithium carbonate, and insoluble calcium carbonate is mixed into the lithium carbonate produced from a filtrate. Therefore, it is difficult to effectively use the recovered Li content. In addition, in Patent Document 2, when calcium hydroxide is used as an additive, a Ca content is removed by carbonation and re-dissolution, Ca content precipitation, and solid-liquid separation, and a process thereof is complicated.

### [Citation List]

### [Patent Documents]

[Patent Document 1]
   Japanese Unexamined Patent Application, First Publication No. 2019-160429 (A)
[Patent Document 2]
   Japanese Unexamined Patent Application, First Publication No. 2019-11518 (A)

### [Summary of Invention]

### [Technical Problem]

An objective of the present invention is to separate and recover a Li content contained in a lithium ion battery from a Na content and a Ca content contained in an additive.

### [Solution to Problem]

A valuable metal recovery method according to an aspect of the present invention (hereinafter, referred to as the "valuable metal recovery method of the present invention") includes: a screening step of screening a battery slag from lithium ion battery waste; an acid leaching step of adding an acid to the battery slag to produce a leachate; a first addition step of adding a first sulfur compound as a first additive and contains a Na content to the leachate to produce a first processed product; a first filtration step of filtering the first processed product to be separated into a first processed filtrate and a first processed residue containing a Cu content; a second addition step of adding a second sulfur compound as a second additive and contains a Na content to the first processed residue to produce a second processed product; a second filtration step of filtering the second processed product to be separated into a second processed filtrate and a second processed residue containing a Co content and/or a Ni content; a third addition step of adding calcium hydroxide as a third additive to the second processed filtrate to produce a third processed product; a third filtration step of filtering the third processed product to be separated into a third processed filtrate and a third processed residue containing a Li content; a fourth addition step of adding sodium carbonate as a fourth additive to the third processed filtrate to produce a fourth processed product; a fourth filtration step of filtering the fourth processed product to be separated into a fourth processed filtrate and a fourth processed residue containing a Ca content; a heating step of heating the fourth processed filtrate; a fifth addition step of blowing carbon dioxide into the heated fourth processed filtrate or adding a carbonate to the heated fourth processed filtrate to produce a fifth processed product; and a fifth filtration step of filtering the fifth processed product to be separated into a fifth processed filtrate containing a Na content and a fifth processed residue containing a Li content. A pH of the second processed product is higher than a pH of the first processed product, and a pH of the third processed product is higher than the pH of the second processed product. In the present application, the valuable metal includes Li, Ni, and Co, but other metals may also be contained.

According to the valuable metal recovery method, a pH of each processed product (first processed product to third processed product) is increased through a plurality of stages to recover each processed residue (first processed residue to third processed residue). As a result, the total amount of the residue produced in each step is reduced, so that the amount of Li adhered to the residue can be reduced, thereby improving a yield.

Here, each of the first and second processed residues contains a small amount of sulfides of Cu, Ni, and Co, whereas the amount of sulfides thereof in the third processed residue greatly decreases due to the provision of the first and second addition and filtration steps, because of two factors. (1) The third processed residue is reduced as much as the content of Cu, Ni, and Co having already been removed. (2) The amount of calcium hydroxide to be added may be decreased because the pH is increased by the first and second addition and filtration steps, and CaSO₄ precipitation is thus reduced, thereby reducing the third processed residue. Therefore, the Li content contained in the battery slag can be more efficiently recovered from the third processed filtrate than those in the related art.

According to the above-described valuable metal recovery method, the neutralization is carried out with the third additive containing Ca, so that the neutralization can be carried out at a lower cost as compared with the case in which a Na salt is used, and mixing of Na, which is difficult to be separated from Li, can be avoided. Sodium carbonate is used as the fourth additive in order to remove Ca derived from the third additive containing a Ca salt; however, the added amount of Na is smaller than the amount of a Na salt required for neutralization. Therefore, a load of separating Li and Na can be suppressed.

In addition, according to the above-described valuable metal recovery method, in the fourth addition step, it is possible to efficiently separate only the Ca content contained in the third processed filtrate. The reason is that sodium carbonate with high solubility is used as the fourth additive; the Ca content reacts with carbonate ions even at room temperature and precipitates as calcium carbonate, but the temperature at which the Li content is produced as lithium carbonate is 50°C or higher. As a result, the Ca content contained in the fourth processed product (which has been produced from the third processed filtrate) can be efficiently removed in the fourth filtration step. In this manner, the Li content contained in the lithium ion battery can be separated from the Ca content contained in the third additive.

Furthermore, according to the above-described valuable metal recovery method, in the fifth addition step, it is possible to efficiently carbonate the Li content contained in the fourth processed filtrate. As a result, the Li content contained in the fifth processed product (which has been produced from the fourth processed filtrate) can be efficiently recovered in the fifth filtration step. In this manner, the Li content contained in the lithium ion battery can be separated from the Na content contained in each of the first additive, the second additive, and the fourth additive. The sodium carbonate used as the fourth additive in the present invention may be a hydrate.

In the valuable metal recovery method of the present invention, the sulfuric acid, which is the acid, and hydrogen peroxide may be added to the battery slag in the acid leaching step.

With satisfaction of this feature, the Ni content and/or the Co content contained in the battery slag can be reduced to divalent by hydrogen peroxide and efficiently leached into sulfuric acid. As a result, a large amount of the Ni content and/or the Co content can be recovered as the second processed residue.

The valuable metal recovery method of the present invention may include a washing step of washing the third processed residue with an alkaline aqueous solution to produce a washing product, and a post-washing filtration step of filtering the washing product to be separated into a washing filtrate containing the Li content and a washing residue. In the fourth addition step, the fourth processed product may be produced from the third processed filtrate and the washing filtrate.

With satisfaction of this feature, the Li content adhering to the third processed residue can be washed off by the alkaline aqueous solution without redissolving the hydroxide contained in the third processed residue (hydroxide produced in the third addition step). As a result, this Li content is contained in the washing filtrate. Accordingly, both this Li content and the Li content contained in the third processed filtrate can be recovered.

In the valuable metal recovery method of the present invention, the battery slag includes a positive-electrode active material containing Ni and/or Co and a negative-electrode active material containing graphite, and the method further includes a sintering step of sintering the battery slag and oxidizing the graphite to produce carbon dioxide. In the acid leaching step, the sulfuric acid is added to the sintered battery slag.

With satisfaction of this feature, in the sintering step, the Ni content and/or the Co content contained in the positive-electrode active material and the graphite contained in the negative-electrode active material in the battery slag can be brought into contact with each other, and electrons contained in the graphite can be transferred to the Ni content and/or the Co content to produce carbon dioxide. Therefore, the Ni content and the Co content contained in the positive-electrode active material in the battery slag can be reduced to divalent and efficiently leached into the sulfuric acid. In addition, the volume of the battery slag can be reduced by the sintering. Then, in order to add the sulfuric acid to the battery slag whose volume is reduced, the Ni content and the Co content contained in the positive-electrode active material in the battery slag can be leached out into the sulfuric acid only by the addition of a small amount of the sulfuric acid. Therefore, the Ni content and the Co content contained in the battery slag can be efficiently recovered as the second processed residue.

A valuable metal recovery apparatus according to another aspect of the present invention (hereinafter, referred to as the "valuable metal recovery apparatus of the present invention") includes: a screening device configured to recover a battery slag from lithium ion battery waste; an acid leaching device configured to add an acid to the battery slag to produce a leachate; a first addition device configured to add a first sulfur compound as a first additive and contains a Na content to the leachate to produce a first processed product; a first filtration device configured to filter the first processed product to be separated into a first processed filtrate and a first processed residue containing a Cu content; a second addition device configured to add a second sulfur compound as a second additive and contains a Na content to the first processed residue to produce a second processed product; a second filtration device configured to filter the second processed product to be separated into a second processed filtrate and a second processed residue containing a Co content and/or a Ni content; a third addition device configured to add calcium hydroxide as a third additive to the second processed filtrate to produce a third processed product; a third filtration device configured to filter the third processed product to be separated into a third processed filtrate and a third processed residue containing a Li content; a fourth addition device configured to add sodium carbonate as a fourth additive to the third processed filtrate to produce a fourth processed product; a fourth filtration device configured to filter the fourth processed product to be separated into a fourth processed filtrate and a fourth processed residue containing a Ca content; a heating device configured to heat the fourth processed filtrate; a fifth addition device configured to blow carbon dioxide into the heated fourth processed filtrate or add a carbonate to the heated fourth processed filtrate to produce a fifth processed product; and a fifth filtration device configured to filter the fifth processed product to be separated into a fifth processed filtrate containing a Na content and a fifth processed residue containing a Li content. A pH of the second processed product may be higher than a pH of the first processed product, and a pH of the third processed product may be higher than the pH of the second processed product.

With satisfaction of this feature, the same effects as those of the first aspect can be produced.

### [Advantageous Effects of Invention]

As described above, according to the present invention, the Li content contained in the lithium ion battery can be separated from the Na content and the Ca content contained in the additive, and recovered.

### [Brief Description of Drawings]

FIG. 1 is an explanatory diagram showing a procedure of a valuable metal recovery method according to an embodiment of the present invention.
FIG. 2 is an explanatory diagram showing a valuable metal recovery apparatus according to an embodiment of the present invention.

### [Description of Embodiments]

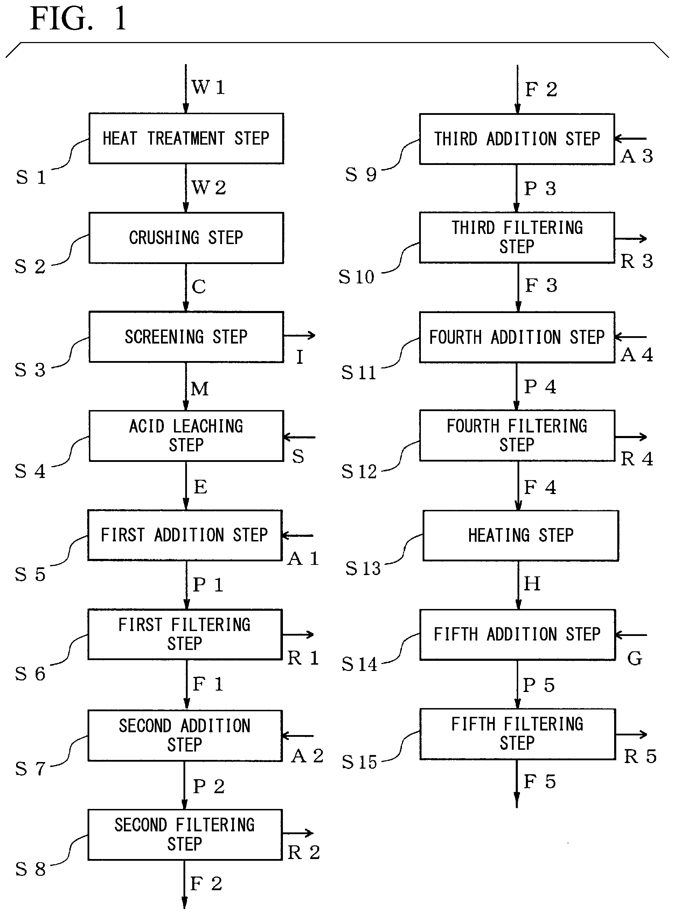

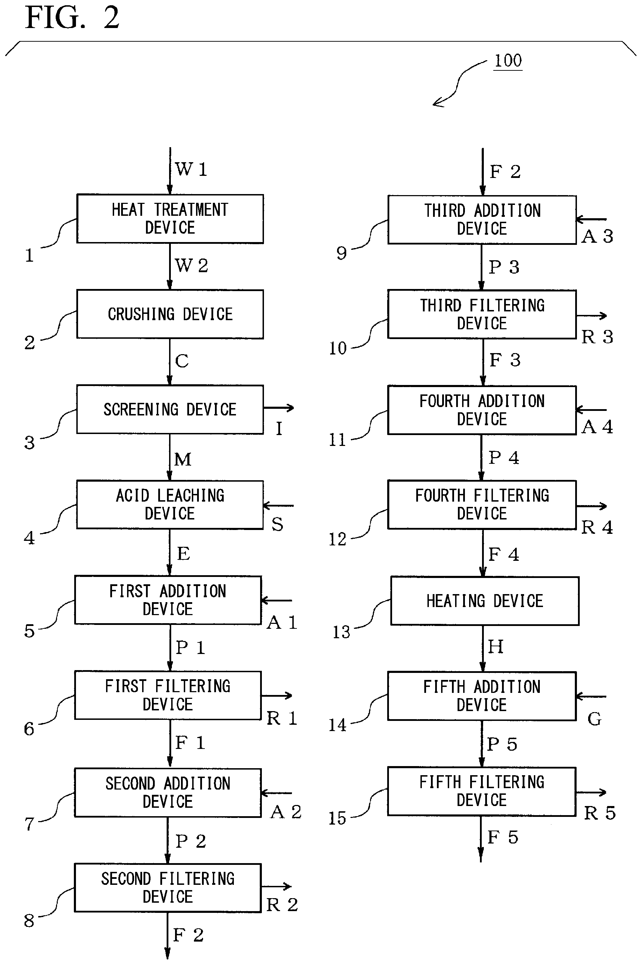

A valuable metal recovery method according to an embodiment of the present invention will be described. This recovery method has been applied to the treatment for a so-called lithium ion battery. FIG. 1 is an explanatory diagram of showing a procedure of this recovery method. FIG. 2 is schematically showing a valuable metal recovery apparatus 100 for carrying out this recovery method.

As shown in FIG. 1, this recovery method includes a heat treatment step S1, a crushing step S2, a screening step S3, an acid leaching step S4, a first addition step S5, a first filtration step S6, a second addition step S7, a second filtration step S8, a third addition step S9, a third filtration step S10, a fourth addition step S11, a fourth filtration step S12, a heating step S13, a fifth addition step S14, and a fifth filtration step S15.

The heat treatment step S1 is a step of heat-treating a lithium ion battery waste W1 by a heat treatment device 1 (FIG. 2). The heat treatment is performed in a condition of, for example, a superheated steam and/or nitrogen atmosphere at 500°C for 1 hour. In this step, an electrolytic solution contained in the waste W1 can be heated and volatilized to detoxify the waste W1. The waste W1 contains metals such as a Li content, a Ni content, a Co content, a Mn content, an Al content, and a Cu content. In the heat treatment step S1, the waste W1 is heat-treated, thereby obtaining a waste W2.

The crushing step S2 is a step of crushing the waste W2 by a crushing device 2 (FIG. 2) to produce a crushed product C. For example, a twin-screw crusher and a hammer crusher can be used as the crushing device 2.

The screening step S3 is a step of removing metal pieces I from the crushed product C and screening the battery slag M by using a screening device 3 (FIG. 2). A sieve such as a vibration sieve can be used as the screening device 3. When the sieve is used, for example, a sieve having a sieve mesh of about 0.5 mm is used, and the content that has passed through the sieve is the battery slag M and the remaining content in the sieve is impurities I. The battery slag M is mixed powder having a positive-electrode active material and a negative-electrode active material contained in the waste W1. The metal pieces I have aluminum pieces and copper pieces included in the waste W1.

In the acid leaching step S4, an acid S is added to the battery slag M in the acid leaching device 4 (FIG. 2), thereby leaching metals (Li content, Ni content, Co content, Mn content, Al content, Cu content, and other metal contents) contained in the battery slag M into the acid S. In the acid leaching step S4, a leachate E which is a mixed solution of the battery slag M and the acid S is produced. For example, a mixture of sulfuric acid and hydrogen peroxide can be used as the acid S.

The first addition step S5 is a step of adding a first additive A1 (first sulfur compound) to the leachate E in the first addition device 5 (FIG. 2) to produce Cu sulfide contained in the leachate E. In the first addition step S5, a first processed product P1, which is a mixture of the leachate E and the first additive A1, is produced. As the first additive A1, the sulfur compound containing a Na content can be used, and specifically, sodium hydrogen sulfide can be used. Regarding the addition of the first additive A1, a pH of the first processed product P 1 is preferably 1 or less, and the oxidation-reduction potential (ORP) is preferably 0 mV (vs. Ag/AgCl) or less.

The first filtration step S6 is a step of filtering, in the first filtration device 6 (FIG. 2), the first processed product P1 composed of a liquid component and a solid component to be separated into a first processed residue F1, which is a liquid component, and a first processed residue R1, which is a solid component. The first processed residue R1 contains Cu sulfide. The first processed residue F1 contains a Li content, a Ni content, a Co content, a Mn content, an Al content, and a Na content (the Na content is derived from the first additive A1). The first processed residue F1 contains almost no Cu content (this point will be described in the test example described later). In this manner, the Li content is separated from the Cu content.

The second addition step S7 is a step of adding a second additive A2 (second sulfur compound) to the first processed residue F1 in the second addition device 7 (FIG. 2) to produce sulfides of the Ni content and the Co content contained in the first processed residue F1. In the second addition step S7, a second processed product P2, which is a mixture of the first processed residue F1 and the second additive A2, is produced. As the second additive A2, the sulfur compound containing a Na content can be used, and specifically, sodium hydrogen sulfide can be used. Regarding the addition of the second additive A2, a pH of the second processed product P2 is preferably 2 or more and 3 or less (which is more than the pH of the processed product P1), and the oxidation-reduction potential (ORP) is preferably -420 mV (vs. Ag/AgCl) or less.

The second filtration step S8 is a step of filtering, in the second filtration device 8 (FIG. 2), the second processed product P2 composed of a liquid component and a solid component to be separated into a second processed filtrate F2, which is a liquid component, and a second processed residue R2, which is a solid component. The second processed residue R2 contains sulfides of a Ni content and a Co content. The second processed filtrate F2 contains a Li content, a Mn content, an Al content, and a Na content (derived from the first additive A1 and the second additive A2). The second processed filtrate F2 contains almost no Ni content and Co content (this point will be described in the test example described later). In this manner, the Li content is separated from the Ni content and the Co content.

The third addition step S9 is a step of adding a third additive A3 to the second processed filtrate F2 in the third addition device 9 (FIG. 2) to produce hydroxides, such as the Al content and the Mn content contained in the second processed filtrate F2. In the third addition step S9, a third processed product P3, which is a mixture of the second processed filtrate F2 and the third additive A3, is produced. Calcium hydroxide is used as the third additive A3. Regarding the addition of the third additive A3, a pH of the third processed product P3 is preferably 10 or more (more than the pH of the second processed product P2).

The third filtration step S10 is a step of filtering, in the third filtration device 10 (FIG. 2), the third processed product P3 composed of a liquid component and a solid component to be separated into a third processed filtrate F3, which is a liquid component, and a third processed residue R3, which is a solid component. The third processed residue R3 contains hydroxides of an Al content and a Mn content. The third processed filtrate F3 contains a Li content, a Na content, and a Ca content (derived from the third additive A3). The third processed filtrate F3 contains almost no Al content and Mn content (this point will be described in the test example described later). In this manner, the Li content is separated from the Al content and the Mn content.

The fourth addition step S11 is a step of adding a fourth additive A4 to the third processed filtrate F3 in the fourth addition device 11 (FIG. 2) to precipitate the Ca content without precipitating the Li content contained in the third processed filtrate F3. In the fourth addition step S11, a fourth processed product P4, which is a mixture of the third processed filtrate F3 and the fourth additive A4, is produced. As the fourth additive A4, either sodium carbonate or sodium carbonate hydrate is used, or a combination thereof is used.

The fourth filtration step S12 is a step of filtering, by the fourth filtration device 12 (FIG. 2), the fourth processed product P4 composed of a liquid component and a solid component to be separated into a fourth processed filtrate F4, which is a liquid component, and a fourth processed residue R4, which is a solid component. The fourth processed residue R4 contains carbonate of a Ca content, and the fourth processed filtrate F4 contains a Li content and a Na content. In this step, the Li content is separated from the Ca content. In the fourth filtration step S12, in order to prevent the Li content from being carbonate together with the Ca content and discharged together with the Ca content as the fourth processed residue R4, it is preferable to separate the fourth processed product P4 into the fourth processed filtrate F4 and the fourth processed residue R4 while maintaining the temperature lower than 50°C (preferably 20°C or higher and 30°C or lower).

The heating step S13 is a step of heating the fourth processed filtrate F4 to 50°C or higher (preferably 60°C or higher and 80°C or lower) by the heating device 13 (FIG. 2) to produce a high-temperature filtrate H.

The fifth addition step S14 is a step of blowing, by the fifth addition device 14 (FIG. 2), carbon dioxide G into the high-temperature filtrate H and carbonating the Li content contained in the high-temperature filtrate H. In the fifth addition step S14, a fifth processed product P5, which is a mixture of the high-temperature filtrate H and the carbon dioxide G, is produced. Instead of blowing the carbon dioxide G into the high-temperature filtrate H, or while blowing the carbon dioxide G into the high-temperature filtrate H, carbonate (for example, sodium hydrogen carbonate or sodium carbonate hydrate) can be added to the high-temperature filtrate H.

The fifth filtration step S15 is a step of filtering, by the fifth filtration device 15 (FIG. 2), the fifth processed product P5 composed of a liquid component and a solid component to be separated into a fifth processed filtrate F5, which is a liquid component, and a fifth processed residue R5, which is a solid component. The fifth processed residue R5 contains carbonate of a Li content, and the fifth processed filtrate F5 contains a Na content. In this step, the Li content is separated from the Na content. In the fifth filtration step S15, for the purpose of carbonating the Li content, it is preferable to separate the fifth processed product P5 into the fifth processed filtrate F5 and the fifth processed residue R5 while maintaining the temperature 50°C or higher (preferably 60°C or higher and 80°C or lower).

Next, the test example with the valuable metal recovery method and the recovery apparatus according to the embodiment of the present invention will be described. Hereinafter, each step in the test example will be described in correspondence with the above-described embodiment. In addition, in the following, matters that are not particularly described are the same as those of the above-described embodiment.

### (Heat Treatment Step to Acid Leaching Step)

100 ml of sulfuric acid (concentration of 2 mol/l) and 5 ml of a hydrogen peroxide solution (concentration of 30% by mass) are added to 14.5 g of a battery slag recovered from a lithium ion secondary battery waste to produce a leachate. The leachate was heated to 60°C and stirred for 4 hours. Then, the leachate was allowed to cool to room temperature.

### (First Addition Step)

ANaSH aqueous solution (concentration of 200 g/l) was added to the leachate that had been allowed to cool to room temperature to produce a first processed product. The NaSH aqueous solution was added until an oxidation-reduction potential (ORP) of the first processed product reached 0 mV (vs. Ag/AgCl). Next, a NaOH aqueous solution (concentration of 25% by mass) was added to the first processed product. The NaOH aqueous solution was added until the pH of the first processed product was adjusted to about 3.5.

### (First Filtration Step)

The first processed product to which a NaOH aqueous solution was added was filtered to be separated into a first processed filtrate and a first processed residue.

### (Second Addition Step)

A NaSH aqueous solution (concentration of 200 g/l) was added to the first processed residue to produce a second processed product. The addition of a NaSH aqueous solution was carried out such that an oxidation-reduction potential (ORP) of the second processed product reached -420 mV.

### (Second Filtration Step)

The second processed product was filtered to be separated into a second processed filtrate and a second processed residue.

### (Third Addition Step)

An aqueous calcium hydroxide solution was added to the second processed filtrate to produce a third processed product. The addition of the aqueous calcium hydroxide solution was carried out such that the pH of the third processed product was 10.0 or more.

### (Third Filtration Step)

The third processed product was filtered to be separated into a third processed filtrate and a third processed residue.

**[Table 1]**

| | Concentration of each component (g/l) | | | | | | | | |
|---|---|---|---|---|---|---|---|---|---|
| | Ni | Co | Mn | Li | Al | Cu | Fe | Mg | Zn |
| Leachate | 12.72 | 13.79 | 12.53 | 6.91 | 3.78 | 0.98 | 0.12 | 0.01 | 0.10 |
| First processed residue | 10.29 | 11.09 | 10.12 | 5.62 | 2.20 | < 0.01 | 0.10 | < 0.01 | 0.08 |
| Second processed filtrate | 0.05 | 0.07 | 9.33 | 4.17 | 1.71 | < 0.01 | 0.04 | 0.03 | < 0.01 |
| Third processed filtrate | < 0.01 | < 0.01 | < 0.01 | 4.14 | < 0.01 | < 0.01 | < 0.01 | 0.00 | < 0.01 |

In Table 1, chemical compositions of the leachate, the first processed residue, the second processed filtrate, and the third processed filtrate, which were measured by inductively coupled plasma (ICP) optical emission spectroscopy, were shown. As shown in Table 1, the leachate contains large amounts of a Ni content, a Co content, a Mn content, an Al content, a Cu content, a Fe content, a Mg content, and a Zn content in addition to the Li content. In the first processed residue, the concentration of the Cu content is reduced to less than 0.01 g/l. In the second processed filtrate, the concentrations of the Ni content and the Co content are further reduced to less than 0.10 g/l. In the third processed filtrate, while the concentration of the Li content was 4.14 g/l, the concentrations of the metals other than the Li content (Ni content, Co content, Mn content, Al content, Cu content, Fe content, Mg content, and Zn content) are all reduced to less than 0.01 g/l.

As described above, according to the above-described embodiment, by providing the heat treatment step S1 to the third filtration step S10 (or the heat treatment device 1 to the third filtration device 10), the Li content contained in the lithium ion battery waste W1 can be separated from other metals and efficiently recovered.

In addition, according to the above-described embodiment, by providing the fourth addition step S11 to the fifth filtration step S15, the Li content contained in the lithium ion battery waste W1 can be separated from the Na content contained in the first additive A1, the second additive A2, and the fourth additive A4, and the Ca content contained in the third additive A3, and can be recovered.

Furthermore, according to the above-described embodiment, the Cu content can be recovered as the first processed residue R1, the Ni content and the Co content can be recovered as the second processed residue R2, and the Al content and the Mn content can be recovered as the third processed residue R3. Accordingly, these recovered metals can be effectively used. In particular, in the acid leaching step S4, by adding sulfuric acid and hydrogen peroxide as the acid S, the Ni content and the Co content contained in the battery slag M are reduced from trivalent or tetravalent to divalent to leach a large amount thereof into the sulfuric acid. Thus, it is possible to recover a large amount of the Ni content and the Co content as the second processed residue R2.

In addition, in the above-described embodiment, the heat treatment step S1 and the crushing step S2 can be appropriately omitted.

In the above-described embodiment, the washing step of washing the third processed residue R3 with the alkaline aqueous solution to produce the washing product, and the post-washing filtration step of filtering the washing product to be separated into the washing filtrate containing the Li content and the washing residue can be provided. In this case, in the fourth addition step S11, the fourth processed product P4 is produced from the third processed filtrate F3 and the washing filtrate.

Accordingly, the Li content adhering to a surface or the like of the third processed residue can be washed off by the alkaline aqueous solution without redissolving the hydroxide contained in the third processed residue R3 (hydroxide produced in the third addition step). As a result, this Li content is contained in the washing filtrate. Accordingly, both this Li content and the Li content contained in the third processed filtrate F3 can be recovered.

As the alkaline aqueous solution, a solution containing a Ca content is used. Specifically, for example, an aqueous calcium hydroxide solution can be used. The alkaline aqueous solution preferably has a pH of 10 or more in order not to dissolve the Mn content and other metal contents contained in the third processed residue R3.

Furthermore, in the above-described embodiment, the sintering step of sintering the battery slag M including the positive-electrode active material containing Ni and/or Co and the negative-electrode active material containing graphite, and oxidizing the graphite to produce carbon dioxide can be further provided. In this case, the sintering step is performed after the screening step S3, and in the acid leaching step S4, the sulfuric acid is added to the sintered battery slag M.

Accordingly, in the sintering step, the Ni content and/or the Co content contained in the positive-electrode active material and the graphite contained in the negative-electrode active material in the battery slag M can be brought into contact with each other, and electrons contained in the graphite can be transferred to the Ni content and/or the Co content to produce carbon dioxide. Therefore, the Ni content and the Co content contained in the positive-electrode active material in the battery slag can be reduced to divalent by the sintering and efficiently leached into the sulfuric acid. In addition, the volume of the battery slag can be reduced. Then, in order to add the sulfuric acid to the battery slag M whose volume is reduced, the Ni content and the Co content contained in the positive-electrode active material in the battery slag can be leached out into the sulfuric acid only by the addition of a small amount of the sulfuric acid. Therefore, the Ni content and the Co content contained in the battery slag can be efficiently recovered as the second processed residue R2.

### [Industrial Applicability]

It is possible to separate and recover the Li content contained in the lithium ion battery from the Na content and the Ca content contained in the additive.

### [Reference Signs List]

1: Heat treatment device
2: Crushing device
3: Screening device
4: Acid leaching device
5: First addition device
6: First filtration device
7: Second addition device
8: Second filtration device
9: Third addition device
10: Third filtration device
11: Fourth addition device
12: Fourth filtration device
13: Heating device
14: Fifth addition device
15: Fifth filtration device

## Claims

1. A valuable metal recovery method comprising:
a screening step of screening a battery slag from lithium ion battery waste;
an acid leaching step of adding an acid to the battery slag to produce a leachate;
a first addition step of adding a first sulfur compound as a first additive and contains a Na content to the leachate to produce a first processed product;
a first filtration step of filtering the first processed product to be separated into a first processed filtrate and a first processed residue containing a Cu content;
a second addition step of adding a second sulfur compound as a second additive and contains a Na content to the first processed residue to produce a second processed product;
a second filtration step of filtering the second processed product to be separated into a second processed filtrate and a second processed residue containing a Co content and/or a Ni content;
a third addition step of adding calcium hydroxide as a third additive to the second processed filtrate to produce a third processed product;
a third filtration step of filtering the third processed product to be separated into a third processed filtrate and a third processed residue containing a Li content;
a fourth addition step of adding sodium carbonate as a fourth additive to the third processed filtrate to produce a fourth processed product;
a fourth filtration step of filtering the fourth processed product to be separated into a fourth processed filtrate and a fourth processed residue containing a Ca content;
a heating step of heating the fourth processed filtrate;
a fifth addition step of blowing carbon dioxide into the heated fourth processed filtrate or adding a carbonate to the heated fourth processed filtrate to produce a fifth processed product; and
a fifth filtration step of filtering the fifth processed product to be separated into a fifth processed filtrate containing a Na content and a fifth processed residue containing a Li content,
wherein a pH of the second processed product is higher than a pH of the first processed product, and a pH of the third processed product is higher than the pH of the second processed product.

2. The valuable metal recovery method according to Claim 1, wherein in the acid leaching step, sulfuric acid, which is the acid, and hydrogen peroxide are added to the battery slag.

3. The valuable metal recovery method according to Claim 1 or 2 comprising:
a washing step of washing the third processed residue with an alkaline aqueous solution to produce a washing product; and
a post-washing filtration step of filtering the washing product to be separated into a washing filtrate containing the Li content and a washing residue,
wherein in the fourth addition step, the fourth processed product is produced from the third processed filtrate and the washing filtrate.

4. The valuable metal recovery method according to Claim 2,
wherein the battery slag includes a positive-electrode active material containing Ni and/or Co and a negative-electrode active material containing graphite,
the method further comprises a sintering step of sintering the battery slag and oxidizing the graphite to produce carbon dioxide, and
in the acid leaching step, the sulfuric acid is added to the sintered battery slag.

5. A valuable metal recovery apparatus comprising:
a screening device configured to recover a battery slag from lithium ion battery waste;
an acid leaching device configured to add an acid to the battery slag to produce a leachate;
a first addition device configured to add a first sulfur compound as a first additive and contains a Na content to the leachate to produce a first processed product;
a first filtration device configured to filter the first processed product to be separated into a first processed filtrate and a first processed residue containing a Cu content;
a second addition device configured to add a second sulfur compound as a second additive and contains a Na content to the first processed residue to produce a second processed product;
a second filtration device configured to filter the second processed product to be separated into a second processed filtrate and a second processed residue containing a Co content and/or a Ni content;
a third addition device configured to add calcium hydroxide as a third additive to the second processed filtrate to produce a third processed product;
a third filtration device configured to filter the third processed product to be separated into a third processed filtrate and a third processed residue containing a Li content;
a fourth addition device configured to add sodium carbonate as a fourth additive to the third processed filtrate to produce a fourth processed product;
a fourth filtration device configured to filter the fourth processed product to be separated into a fourth processed filtrate and a fourth processed residue containing a Ca content;
a heating device configured to heat the fourth processed filtrate;
a fifth addition device configured to blow carbon dioxide into the heated fourth processed filtrate or add a carbonate to the heated fourth processed filtrate to produce a fifth processed product; and
a fifth filtration device configured to filter the fifth processed product to be separated into a fifth processed filtrate containing a Na content and a fifth processed residue containing a Li content,
wherein a pH of the second processed product is higher than a pH of the first processed product, and a pH of the third processed product is higher than the pH of the second processed product.
